# EUROPEAN PATENT APPLICATION

(11) **EP 4 498 484 A2**
(43) Date of publication of application: **29.01.2025**
(21) Application number: 24188040.0
(22) Date of filing: 11.07.2024
(51) Int. Cl.: H01M 50/109, H01M 50/153, H01M 10/04, H01M 50/552, H01M 50/562, H01M 50/181

(54) **BUTTON CELL**

(30) Priority: 24.07.2023 KR 20230096392
(71) Applicant: SAMSUNG SDI CO., LTD., Giheung-gu Yongin-si, Gyeonggi-do 17084 (KR)
(72) Inventor: Kim, Yoonbin, 17084 Yongin-si, Gyeonggi-do (KR); Kim, Dae-Sup, 17084 Yongin-si, Gyeonggi-do (KR)
(74) Representative: Gulde & Partner

(57) **Abstract**

A button cell (1000, 1002, 1003, 1004, 1005, 1006, 1007) includes: an electrode assembly (100) including a first electrode (110), a second electrode (120), and a separator (130); a case (200) connected to the first electrode (110), accommodating the electrode assembly (100), and having an opening (210) exposing the electrode assembly (100); a cap plate (300) connected to the case (200) to cover an outer boundary region of the opening (210), and having a penetration hole (310) exposing a central region of the opening (210); a terminal plate (400) connected to the second electrode (120), insulated from and bonded to the cap plate (300), and including a protrusion plate (420) protruding from a rear surface (412) of a main plate (410) in a direction toward the electrode assembly (100), the main plate (410) covering the penetration hole (310); and a bonding layer (500) between and insulating the cap plate (300) and the main plate (410). A front surface (411) of the main plate (410) and a front surface (301) of the cap plate (300) are located at the same plane as each other.

## Description

### BACKGROUND

### 1. Field

Aspects of embodiments of the present disclosure relate to a button cell.

### 2. Description of the Related Art

In general, a rechargeable battery is a battery that can be repeatedly charged and discharged.

Recently, as a demand for wearable devices, such as headphones, earphones, smartwatches, and body-attached medical devices, that uses wireless communication such as Bluetooth increases, desirability for a button cell, which is a micro-sized rechargeable battery that may be mounted in a wearable device, is increasing.

The above information disclosed in this Background section is for enhancement of understanding of the background of the present disclosure, and therefore, it may contain information that does not constitute prior art.

### SUMMARY

A button cell may generally include an electrode assembly including a plurality of electrodes, a case for accommodating the electrode assembly and connected to one electrode of the electrode assembly, a cap plate coupled to the case and having the same polarity as that of the one electrode, and a terminal plate insulated from and bonded to the cap plate and connected to another electrode of the electrode assembly.

One or more embodiments of the present disclosure may be directed to a button cell having a reduced thickness, may facilitate bonding between an electrode assembly and a terminal plate, and/or may have improved impact resistance.

According to one or more embodiments of the present disclosure, a button cell includes: an electrode assembly including a first electrode, a second electrode, and a separator between the first electrode and the second electrode; a case connected to the first electrode, the case accommodating the electrode assembly, and having an opening exposing the electrode assembly; a cap plate connected to the case to cover an outer boundary region of the opening, and the cap having a penetration hole exposing a central region of the opening; a terminal plate connected to the second electrode, the terminal plate is (e.g. electrically) insulated from the cap plate and bonded to the cap plate, and the terminal plate includes a protrusion plate protruding from a rear surface of a main plate in a direction toward the electrode assembly, the main plate covering the penetration hole; and a bonding layer (disposed) between the cap plate and the main plate, and the bonding layer (e.g. electrically) insulating and bonding between the cap plate and the main plate. A front surface of the main plate and a front surface of the cap plate are located at the same plane as each other (e.g. they lie in the same plane).

In other words, the terminal plate may be electrically insulated from the cap plate. For this, the bonding layer may electrically insulate the cap plate from the main plate and bonds the cap plate with the main plate. Thus, the bonding layer may be or comprise an electrical insulator.

In other words, the front surface of the main plate and the front surface of the cap plate may form an even surface.

In an embodiment, the electrode assembly may further include: a first electrode tab extending from the first electrode, and welded to the case; and a second electrode tab extending from the second electrode, and welded to the protrusion plate of the terminal plate.

In an embodiment, the protrusion plate may include the same material as that of the second electrode tab.

In an embodiment, the protrusion plate may include aluminum (Al). Preferably, the protrusion plate may include the same material as that of the second electrode tab, and the protrusion plate may include aluminum (Al).

In an embodiment, the main plate may include a material different from that of the protrusion plate. Preferably, the main plate may include a material different from that of the protrusion plate and the second electrode tab.

In an embodiment, the main plate may include the same material as that of the cap plate. Preferably, the main plate may include a material different from that of the protrusion plate and the second electrode tab, and the main plate may include the same material as that of the cap plate.

In an embodiment, the main plate may include stainless steel. Preferably, the main plate may include a material different from that of the protrusion plate and the second electrode tab, wherein the main plate may include stainless steel. Further preferred, the main plate may include a material different from that of the protrusion plate and the second electrode tab, and the main plate may include the same material as that of the cap plate, wherein the main plate may include stainless steel.

In another embodiment, the main plate may include the same material as that of the protrusion plate. Preferably, the main plate may include the same material as that of the protrusion plate, and the protrusion plate may include the same material as that of the second electrode tab.

In an embodiment, the main plate may be integral with the protrusion plate. Preferably, the main plate may include the same material as that of the protrusion plate, and the protrusion plate may include the same material as that of the second electrode tab, and the main plate may be integral with the protrusion plate.

In an embodiment, the main plate may include a material different from that of the cap plate. Preferably, the main plate may include the same material as that of the protrusion plate, and the protrusion plate may include the same material as that of the second electrode tab, and the main plate may include a material different from that of the cap plate. Further preferred, the main plate may include the same material as that of the protrusion plate, and the protrusion plate may include the same material as that of the second electrode tab, the main plate may be integral with the protrusion plate, and the main plate may include a material different from that of the cap plate.

In an embodiment, the main plate may include aluminum (Al). Preferably, the main plate may include the same material as that of the protrusion plate, and the protrusion plate may include the same material as that of the second electrode tab, and the main plate may include aluminum. Further preferred, the main plate may include the same material as that of the protrusion plate, and the protrusion plate may include the same material as that of the second electrode tab, the main plate may be integral with the protrusion plate, and the main plate may include aluminum. Further preferred, the main plate may include the same material as that of the protrusion plate, and the protrusion plate may include the same material as that of the second electrode tab, the main plate may include a material different from that of the cap plate, and the main plate may include aluminum. Most preferred, the main plate may include the same material as that of the protrusion plate, and the protrusion plate may include the same material as that of the second electrode tab, the main plate may be integral with the protrusion plate, the main plate may include a material different from that of the cap plate, and the main plate may include aluminum.

In an embodiment, the bonding layer may be located at the same height as those of the main plate and the cap plate from the electrode assembly. In other words, the front surface of the main plate and the front surface of the cap plate and the front surface of the bonding layer may form an even surface.

In an embodiment, the bonding layer may be located inside the penetration hole of the cap plate.

In an embodiment, the bonding layer may be located between an outer side edge of the main plate and an inner side edge of the cap plate defining the penetration hole.

In an embodiment, the outer side edge of the main plate may have a forward step shape; and the inner side edge of the cap plate may have a reverse step shape.

In an embodiment, the outer side edge of the main plate may have a reverse step shape; and the inner side edge of the cap plate may have a forward step shape.

In an embodiment, the outer side edge of the main plate may have a forward inclined shape; and the inner side edge of the cap plate may have a reverse inclined shape.

In an embodiment, the outer side edge of the main plate may have a reverse inclined shape; and the inner side edge of the cap plate may have a forward inclined shape.

In an embodiment, the outer side edge of the main plate may have protrusions and depressions; and the inner side edge of the cap plate may have protrusions and depressions.

The afore mentioned embodiments defining the outer side edge of the main plate the inner side edge of the cap plate, provide an increased connection stability at minimum thickness of both elements.

In an embodiment, the bonding layer may have a planar ring shape.

In an embodiment, the bonding layer may include polypropylene.

In an embodiment, a thickness of the protrusion plate may be thinner compared to a thickness of the main plate.

In an embodiment, a thickness of the protrusion plate may be thinner compared to a thickness of the cap plate.

In an embodiment, a thickness of the protrusion plate may be thinner compared to a thickness of the bonding layer.

In an embodiment, the button cell may further include a rear surface insulation layer adjacent to the protrusion plate, and extending from the rear surface of the main plate to the rear surface of the cap plate via a rear surface of the bonding layer.

In an embodiment, the button cell may further include a front surface insulation layer extending from the front surface of the main plate to the front surface of the cap plate via a front surface of the bonding layer, corresponding to the rear surface insulation layer.

The preceding embodiments can be advantageously combined with each other.

According to one or more embodiments of the present disclosure, a button cell may have a reduced thickness, may facilitate bonding between an electrode assembly and a terminal plate, and/or may have improved impact resistance.

However, advantages and effects of the aspects and features of the present disclosure are not limited to those described above. Additional aspects and features will be set forth, in part, in the detailed description that follows with reference to the drawings, and in part, may be apparent therefrom, or may be learned by practicing one or more of the presented embodiments of the present disclosure.

### BRIEF DESCRIPTION OF DRAWINGS

The above and other aspects and features of the present disclosure will be more clearly understood from the following detailed description of the illustrative, non-limiting embodiments with reference to the accompanying drawings.
FIG. 1 is a perspective view illustrating a button cell according to an embodiment.
FIG. 2 is a cross-sectional view taken along the line II-II of FIG. 1.
FIG. 3 is an enlarged view of the portion A of FIG. 2.
FIG. 4 is a top plan view illustrating a front surface of a terminal plate of a button cell according to an embodiment.
FIG. 5 is a top plan view illustrating a rear surface of a terminal plate of a button cell according to an embodiment.
FIG. 6 is a cross-sectional view illustrating a button cell according to another embodiment.
FIG. 7 is an enlarged view of the portion B of FIG. 6.
FIG. 8 is a cross-sectional view showing a button cell according to another embodiment.
FIG. 9 is an enlarged view of the portion C of FIG. 8.
FIG. 10 is a cross-sectional view illustrating a portion of a button cell according to another embodiment.
FIG. 11 is a cross-sectional view illustrating a portion of a button cell according to another embodiment.
FIG. 12 is a cross-sectional view illustrating a portion of a button cell according to another embodiment.
FIG. 13 is a cross-sectional view illustrating a portion of a button cell according to another embodiment.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

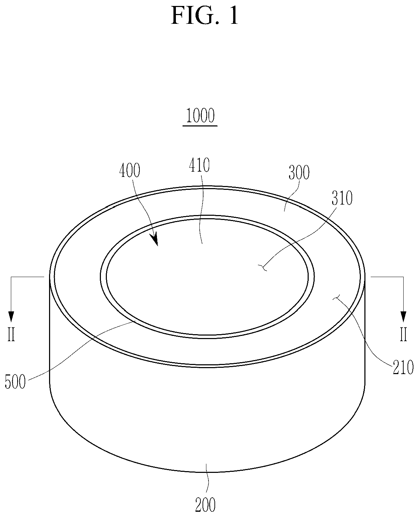

A button cell according to one or more embodiments will first be described with reference to FIG. 1 through FIG. 5.

A button cell according to an embodiment may include a coin cell, which may be an ultra-small rechargeable battery, but the present disclosure is not limited thereto, and may include a cylindrical or pin-type battery.

As used herein, the button cell may be a battery in a thin coin or button shape, and may mean a battery having a ratio of a height to a diameter that is 1 or less, but the present disclosure is not limited thereto. Button cells are typically cylindrical, such that a cross-section in a horizontal direction is circular, but the present disclosure is not limited thereto, and a cross-section in the horizontal direction may be in an elliptical shape or a polygonal shape. As used herein, the diameter may mean a maximum distance in the horizontal direction of the battery, and the height may mean a maximum distance (e.g., a distance from a flat bottom surface to a flat top surface) in a vertical direction of the battery.

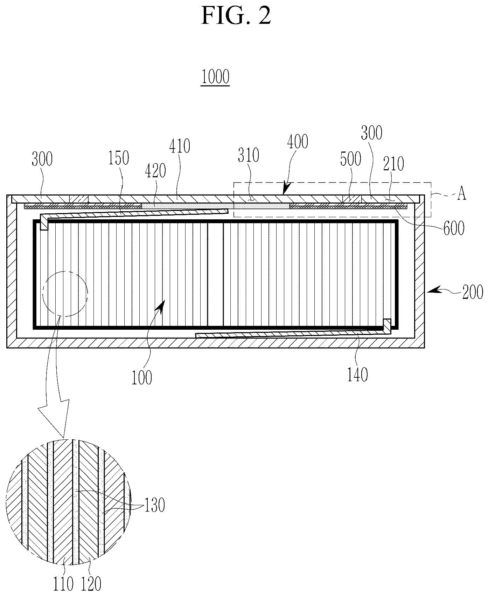

FIG. 1 is a perspective view illustrating a button cell according to an embodiment. FIG. 2 is a cross-sectional view taken along the line II-II of FIG. 1.

Referring to FIG. 1 and FIG. 2, a button cell 1000 according to an embodiment may be a rechargeable battery that can be repeatedly charged and discharged. The button cell 1000 may include an electrode assembly 100, a case 200, a cap plate 300, a terminal plate 400, a bonding layer 500, and a rear surface insulation layer 600.

The electrode assembly 100 is accommodated in the case 200. A lower portion of the electrode assembly 100 faces a bottom portion of the case 200, and an upper portion of the electrode assembly 100 faces the cap plate 300 covering an opening 210 of the case 200, the terminal plate 400, and the bonding layer 500. The upper and lower portions of the electrode assembly 100 may have a planar shape that is parallel or substantially parallel to each other, but the present disclosure is not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and the separator 130 including an insulating material is positioned between the first electrode 110 and the second electrode 120. The first electrode 110 may be an anode, and the second electrode 120 may be a cathode, but the present disclosure is not limited thereto. For example, the first electrode 110 may be the cathode, and the second electrode 120 may be the anode.

The first electrode 110 has a band shape extending in one direction. The first electrode 110 may include an anode coating portion, which is a region where an anode active material layer is applied to a current collector of a metal foil (e.g., a Cu foil), and an anode uncoated portion, which is a region where an active material is not applied. The anode uncoated portion may be positioned at one end portion in an extending direction of the first electrode 110.

The second electrode 120 has a band shape spaced apart from the first electrode 110 with the separator 130 interposed therebetween, and extending in one direction. The second electrode 120 may include a cathode coating portion, which is a region where a cathode active material layer is applied to a current collector of a metal foil (e.g., an aluminum foil), and a cathode uncoated portion, which is a region where an active material is not applied. The cathode uncoated portion may be positioned at one end portion in an extending direction of the second electrode 120.

The separator 130 extends in one direction between the first electrode 110 and the second electrode 120, to prevent short circuit between the first electrode 110 and the second electrode 120.

The first electrode 110, the separator 130, and the second electrode 120 are sequentially stacked and wound in a jelly roll shape, but the present disclosure is not limited thereto, and may be formed in various suitable shapes. Each of the first electrode 110, the second electrode 120, and the separator 130 may include various suitable materials.

The first electrode tab 140 extends from the first electrode 110 of the electrode assembly 100 to the case 200. The first electrode tab 140 is connected to (e.g., attached to or coupled to) the bottom portion of the case 200, and connects the first electrode 110 and the case 200 to each other. The first electrode tab 140 contacts the first electrode 110 and the case 200. The first electrode tab 140 may be welded to the bottom portion of the case 200, but the present disclosure is not limited thereto, and the first electrode tab 140 may contact the bottom portion of the case 200. By the first electrode tab 140, the case 200 and the cap plate 300 may have the same polarity as that of the first electrode 110.

The second electrode tab 150 extends from the second electrode 120 of the electrode assembly 100 to the terminal plate 400. The second electrode tab 150 may be connected to (e.g., attached to or coupled to) a protrusion plate 420 of the terminal plate 400, and connects the second electrode 120 and the terminal plate 400 to each other. The second electrode tab 150 contacts the second electrode 120 and the terminal plate 400. The second electrode tab 150 may be welded to a surface of the protrusion plate 420 of the terminal plate 400, but the present disclosure is not limited thereto, and may be in contact with the surface of the protrusion plate 420. By the second electrode tab 150, the terminal plate 400 may have the same polarity as that of the second electrode 120.

A center pin penetrating a center of the electrode assembly 100 in the vertical direction may be positioned in a central portion of the electrode assembly 100. The center pin may support the first electrode tab 140 and the second electrode tab 150, but the present disclosure is not limited thereto.

The case 200 is connected to the first electrode 110 of the electrode assembly 100, and accommodates the electrode assembly 100. The case 200 includes the opening 210 exposing the upper portion of the electrode assembly 100. The bottom portion of the case 200 may be welded to the first electrode tab 140 and connected to the first electrode 110 of the electrode assembly 100, and accordingly, the case 200 may have the same polarity as that of the first electrode 110. The case 200 may have a can shape in a cylindrical shape for accommodating the electrode assembly 100 of a jelly roll shape, but the present disclosure is not limited thereto, and may have various suitable shapes. The case 200 may accommodate various suitable electrolyte solutions together with the electrode assembly 100. An exterior surface of the case 200 and an exterior surface of the cap plate 300 may be the first electrode terminal of the button cell 1000, but the present disclosure is not limited thereto. An upper surface of a main plate 410, which is an exterior surface of the terminal plate 400, may be the second electrode terminal of the button cell 1000, but the present disclosure is not limited thereto. A plated layer may be coated on the exterior surface of the case 200, but the present disclosure is not limited thereto, and various suitable coating layers may be coated on the exterior surface of the case 200. The case 200 may include stainless steel, but the present disclosure is not limited thereto, and may include various known metals.

The opening 210 of the case 200 may be covered by the cap plate 300, the terminal plate 400, and the bonding layer 500.

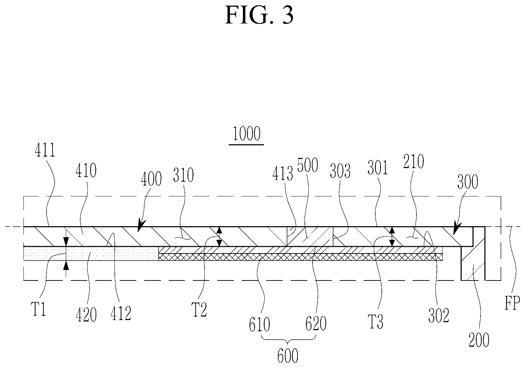

FIG. 3 is an enlarged view of the portion A of FIG. 2.

Referring to FIG. 2 and FIG. 3, the cap plate 300 is coupled to the case 200, and covers an outer boundary region of the opening 210. The cap plate 300 includes a penetration hole 310 exposing a central region of the opening 210. The cap plate 300 may be directly coupled to a sidewall of the case 200 forming the opening 210 of the case 200 by welding or the like, and covers the outer boundary region of the opening 210. The cap plate 300 has a ring shape by the centrally formed penetration hole 310 in a plan view, but the present disclosure is not limited thereto. The cap plate 300 is coupled to the case 200, and has the same polarity as that of the first electrode 110. Accordingly, the cap plate 300 and the case 200 may have the same polarity as that of the first electrode 110. A front surface 301 of the cap plate 300, which is the exterior surface of the cap plate 300, may be the first electrode terminal of the button cell 1000, but the present disclosure is not limited thereto. The cap plate 300 is insulated from and bonded to the terminal plate 400 interposing the bonding layer 500. The cap plate 300 includes stainless steel, but the present disclosure is not limited thereto, and may include various suitable metals.

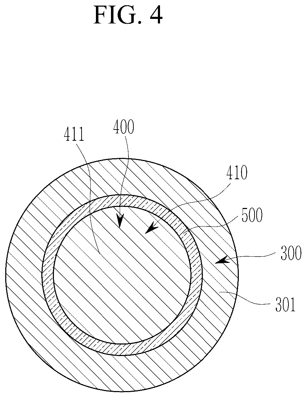

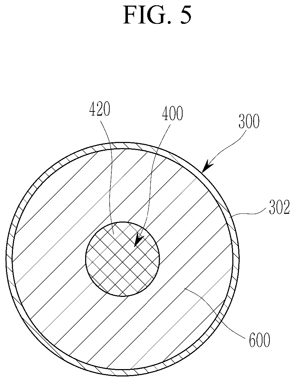

FIG. 4 is a top plan view illustrating a front surface of a terminal plate of a button cell according to an embodiment. FIG. 5 is a top plan view illustrating a rear surface of a terminal plate of a button cell according to an embodiment.

Referring to FIG. 2 to FIG. 5, the terminal plate 400 is connected to the second electrode 120, and is insulated from and bonded to the cap plate 300 by the bonding layer 500. The terminal plate 400 covers the penetration hole 310 of the cap plate 300. The terminal plate 400 is positioned at the same or substantially the same height as that of the cap plate 300 from the electrode assembly 100, and the bonding layer 500 is positioned between the terminal plate 400 and the cap plate 300. The terminal plate 400 covers a central region of the opening 210 of the case 200 exposed by the penetration hole 310 of the cap plate 300. Because the terminal plate 400 covers the central region of the opening 210, the cap plate 300 covers the outer boundary region of the opening 210, and the bonding layer 500 is positioned between the terminal plate 400 and the cap plate 300. As such, the opening 210 of the case 200 is completely covered by the terminal plate 400, the cap plate 300, and the bonding layer 500. The terminal plate 400 firmly seals the electrode assembly 100 together with the case 200, the cap plate 300, and the bonding layer 500. The terminal plate 400 is coupled to the second electrode tab 150 of the electrode assembly 100, and connected to the second electrode 120 of the electrode assembly 100. The terminal plate 400 may have the same polarity as that of the second electrode 120.

The terminal plate 400 includes the main plate 410 and the protrusion plate 420.

The main plate 410 is positioned in the penetration hole 310 of the cap plate 300. The main plate 410 may be positioned completely inside the penetration hole 310 of the cap plate 300, but the present disclosure is not limited thereto. The main plate 410 may not overlap (e.g., non-overlaps) with the cap plate 300 in the vertical direction, which is a thickness direction of and the button cell 1000, and covers the penetration hole 310 of the cap plate 300. The main plate 410 has a wider area compared to that of the protrusion plate 420. The main plate 410 may have a large diameter compared to that of the protrusion plate 420. The main plate 410 has a thicker thickness compared to that of the protrusion plate 420, but the present disclosure is not limited thereto. For example, a second thickness T2 of the main plate 410 may be thicker compared to a first thickness T1 of the protrusion plate 420. A front surface 411 of the main plate 410 may be the second electrode terminal of the button cell 1000, and a rear surface 412 of the main plate 410 contacts the protrusion plate 420. The main plate 410 is insulated from and bonded to the cap plate 300 by the bonding layer 500. An outer side edge 413 of the main plate 410 faces an inner side edge 303 of the cap plate 300 forming the penetration hole 310 of the cap plate 300, and thus, interposing the bonding layer 500. The outer side edge 413 of the main plate 410 is bonded to the inner side edge 303 of the cap plate 300 by the bonding layer 500.

The front surface 411 of the main plate 410 may be positioned at (e.g., in or on) the same plane FP as that of the front surface 301 of the cap plate 300. For example, the front surface 411 of the main plate 410, the front surface 301 of the cap plate 300, and a front surface of the bonding layer 500 may be positioned at (e.g., in or on) the same plane FP as each other. Because the front surface 411 of the main plate 410 and the front surface 301 of the cap plate 300 are positioned at (e.g., in or on) the same plane FP as each other, a thickness of the button cell 1000 may be formed to be relatively thinner.

The main plate 410 includes a material different from that of the protrusion plate 420. For example, the main plate 410 may include the same material as that of the cap plate 300, and the main plate 410 may include the same stainless steel as that of the cap plate 300. As another example, the main plate 410 may include a material having a larger strength compared to that of the protrusion plate 420. As another example, the protrusion plate 420 may include aluminum for ease of bonding to the second electrode tab 150 by welding, and the main plate 410 may include stainless steel, which is a material having a larger strength compared to that of a material included in the protrusion plate 420 so that impact resistance of the button cell 1000 may be improved. Because the main plate 410 includes a different material compared to that of the protrusion plate 420, the impact resistance of the button cell 1000 may be improved.

The protrusion plate 420 is coupled to the rear surface 412 of the main plate 410.

The protrusion plate 420 protrudes from the rear surface 412 of the main plate 410 in a direction toward the electrode assembly 100. The protrusion plate 420 may be bonded to the rear surface 412 of the main plate 410 by welding, but the present disclosure is not limited thereto, and may protrude from the rear surface 412 of the main plate 410 to the electrode assembly 100 by various suitable bonding methods and coupling methods. The protrusion plate 420 is connected to the second electrode 120. The surface of the protrusion plate 420 is coupled to the second electrode tab 150. The surface of the protrusion plate 420 may be welded to the second electrode tab 150, but the present disclosure is not limited thereto. Because the protrusion plate 420 is coupled to the second electrode tab 150, the protrusion plate 420 of the terminal plate 400 and the main plate 410 may have the same polarity as that of the second electrode 120. The surface of the protrusion plate 420 coupled to the second electrode tab 150 may have a smaller diameter compared to that of the front surface 411 of the main plate 410, which may be an electrode terminal. The protrusion plate 420 and the main plate 410 are coupled to each other, but the present disclosure is not limited thereto, and may be integrally formed together by using a forging process or the like.

The protrusion plate 420 includes the same material as that of the second electrode tab 150. For example, the protrusion plate 420 and the second electrode tab 150 may include aluminum. As another example, the protrusion plate 420 may include a material having a greater weldability with respect to the second electrode tab 150 compared to the main plate 410. As another example, the protrusion plate 420 may include aluminum, which is a material having a greater weldability with respect to the second electrode tab 150, and the main plate 410 may include stainless steel, which is a material having a larger strength compared to that of a material included in the protrusion plate 420, so that impact resistance of the button cell 1000 may be improved. Because the protrusion plate 420 includes the same material as that of the second electrode tab 150, and the main plate 410 includes a different material compared to that of the protrusion plate 420, a bonding between the electrode assembly 100 and the terminal plate 400 may be facilitated, and an impact resistance of the button cell 1000 may be improved.

For example, the first thickness T1 of the protrusion plate 420 may be thinner compared to the second thickness T2 of the main plate 410. As another example, the first thickness T1 of the protrusion plate 420 may be thinner compared to a third thickness T3 of the cap plate 300. As another example, the first thickness T1 of the protrusion plate 420 may be thinner compared to a thickness of the bonding layer 500. Because the first thickness T1 of the protrusion plate 420 may be thinner compared to the second thickness T2 of the main plate 410, the third thickness T3 of the cap plate 300, and the thickness of the bonding layer 500, a distance from the electrode assembly 100 to the terminal plate 400 may be reduced or minimized, and therefore, the thickness of the button cell 1000 may be formed to be relatively thinner.

A plated layer including the protrusion plate 420 and the main plate 410 may be coated on the exterior surface of the terminal plate 400, but the present disclosure is not limited thereto, and various suitable coating layers may be coated on the exterior surface of the terminal plate 400. The main plate 410 of the terminal plate 400 may include stainless steel, and the protrusion plate 420 may include aluminum, but the present disclosure is not limited thereto, and the main plate 410 and the protrusion plate 420 may each include various suitable metals.

Referring to FIG. 1 to FIG. 4, the bonding layer 500 is positioned between the main plate 410 of the terminal plate 400 and the cap plate 300. The bonding layer 500 insulates and bonds between the cap plate 300 and the terminal plate 400. The bonding layer 500 includes an insulation material, and insulates between the cap plate 300 and the terminal plate 400. The bonding layer 500 may be thermally bonded by using heat, a laser beam, or the like between the main plate 410 of the terminal plate 400 and the cap plate 300, but the present disclosure is not limited thereto. The bonding layer 500 includes polypropylene resin, but the present disclosure is not limited thereto, and may include various suitable resins for insulating and bonding between the cap plate 300 and the terminal plate 400. Because the bonding layer 500 bonds the cap plate 300 and the terminal plate 400 to each other, the opening 210 of the case 200 accommodated in the electrode assembly 100 is completely sealed by the cap plate 300, the terminal plate 400, and the bonding layer 500.

For example, the bonding layer 500 may include at least one of a thermosetting resin and/or a thermoplastic resin. At least one of the thermosetting resin and/or the thermoplastic resin included in the bonding layer 500 may be stacked as a plurality of layers, but the present disclosure is not limited thereto. The thermosetting resin that may be included in the bonding layer 500 may be in a heat-cured state, and may include various suitable thermosetting resins, such as phenol resin, urea resin, melamine resin, epoxy resin, polyester resin, or the like. The thermoplastic resin that may be included in the bonding layer 500 includes a polypropylene resin that melts at a suitable temperature (e.g., a predetermined temperature), but the present disclosure is not limited thereto, and may include various suitable thermoplastic resins, such as polystyrene, polyethylene, a polyvinyl chloride resin, or the like.

The bonding layer 500 is positioned at the same or substantially the same height as those of the main plate 410 and the cap plate 300 from the electrode assembly 100 between the main plate 410 of the terminal plate 400 and the cap plate 300. The bonding layer 500 is positioned between the outer side edge 413 of the main plate 410 and the inner side edge 303 of the cap plate 300 forming the penetration hole 310, and the bonding layer 500 bonds between the inner side edge 303 of the cap plate 300 and the outer side edge 413 of the main plate 410. The bonding layer 500 is positioned inside the penetration hole 310 of the cap plate 300. For example, the bonding layer 500 may be positioned completely inside the penetration hole 310 of the cap plate 300. The bonding layer 500 has a ring shape in a plan view, but the present disclosure is not limited thereto. For example, the bonding layer 500 may have a planar shape corresponding to at least one planar shape from among those of the inner side edge 303 of the cap plate 300 and the outer side edge 413 of the main plate 410.

Because the bonding layer 500 includes a polypropylene resin or the like having an elasticity compared to ceramic or brittle glass, and bonds the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1000 may be improved.

Referring to FIG. 2, FIG. 3, and FIG. 5, the rear surface insulation layer 600 is adjacent to the protrusion plate 420 on the rear surface 412 of the main plate 410. The rear surface insulation layer 600 is adjacent to the protrusion plate 420, and extends from the rear surface 412 of the main plate 410 to a rear surface 302 of the cap plate 300 via a rear surface of the bonding layer 500. The rear surface insulation layer 600 includes a first sub-rear surface insulation layer 610 and a second sub-rear surface insulation layer 620. The second sub-rear surface insulation layer 620 is positioned between the first sub-rear surface insulation layer 610 and each of the main plate 410, the bonding layer 500, and the cap plate 300. The second sub-rear surface insulation layer 620 may include a resin having a higher adherence compared to that of the first sub-rear surface insulation layer 610, but the present disclosure is not limited thereto.

Because the rear surface insulation layer 600 extends from the protrusion plate 420 to the rear surface 302 of the cap plate 300, the second electrode tab 150 may be prevented from being short circuited with the cap plate 300.

According to an embodiment, the front surface 411 of the main plate 410 of the terminal plate 400 and the front surface 301 of the cap plate 300 may be positioned at (e.g., in or on) the same plane FP as each other, and accordingly, the thickness of the button cell 1000 may be formed to be thinner.

In addition, according to an embodiment, because the main plate 410 of the terminal plate 400 includes a different material from that of the protrusion plate 420, the main plate 410 may include a material having a larger strength compared to that of the protrusion plate 420, and the protrusion plate 420 may include the same material as that of the second electrode tab 150 of the electrode assembly 100, by which bonding between the electrode assembly 100 and the terminal plate 400 may be facilitated, and impact resistance of the button cell 1000 may be improved.

In addition, according to an embodiment, because the first thickness T1 of the protrusion plate 420 is thin compared to the second thickness T2 of the main plate 410, the third thickness T3 of the cap plate 300, and the thickness of the bonding layer 500, the distance from the electrode assembly 100 to the terminal plate 400 may be minimized or reduced, and therefore, the thickness of the button cell 1000 may be formed to be relatively thinner.

In addition, according to an embodiment, because the bonding layer 500 includes polypropylene resin or the like having an elasticity compared to that of ceramic or brittle glass, and bond the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1000 may be improved.

For example, the button cell 1000 having a reduced thickness, facilitating bonding between the electrode assembly 100 and the terminal plate 400, and/or improving impact resistance may be provided.

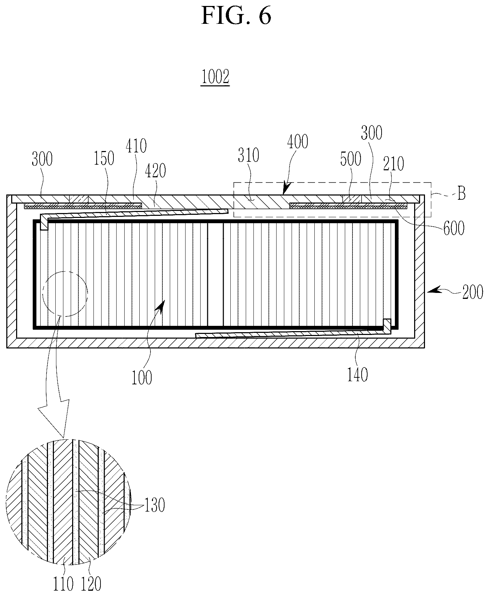

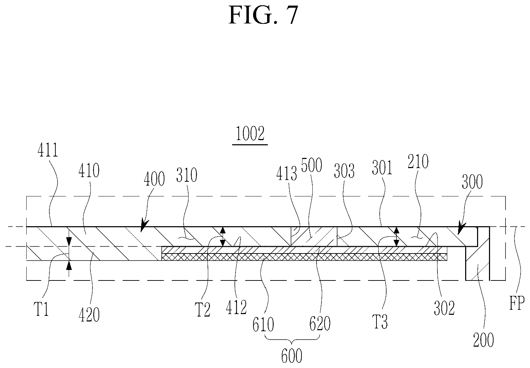

Hereinafter, a button cell according to another embodiment will be described with reference to FIG. 6 and FIG. 7.

Hereinafter, the differences between a button cell described in more detail with reference to FIGS. 6 and 7 and the button cell according to one or more embodiments described above may be mainly described, and redundant description may not be repeated.

FIG. 6 is a cross-sectional view illustrating a button cell according to another embodiment. FIG. 7 is an enlarged view of the portion B of FIG. 6.

Referring to FIG. 6 and FIG. 7, a button cell 1002 according to the present embodiment may include the electrode assembly 100, the case 200, the cap plate 300, the terminal plate 400, the bonding layer 500, and the rear surface insulation layer 600.

The terminal plate 400 includes the main plate 410 and the protrusion plate 420 that are integral to (e.g., integrally formed with) each other.

The main plate 410 is positioned in the penetration hole 310 of the cap plate 300. The main plate 410 may be positioned completely inside the penetration hole 310 of the cap plate 300, but the present disclosure is not limited thereto. The main plate 410 may not overlap

(e.g., non-overlaps) with the cap plate 300 in the vertical direction, which is the thickness direction of the button cell 1002, and covers the penetration hole 310 of the cap plate 300. The main plate 410 has a wider area compared to that of the protrusion plate 420. The main plate 410 may have a large diameter compared to the protrusion plate 420. The main plate 410 has a thicker thickness compared to that of the protrusion plate 420, but the present disclosure is not limited thereto. For example, the second thickness T2 of the main plate 410 is thicker compared to the first thickness T1 of the protrusion plate 420. The front surface 411 of the main plate 410 may be the second electrode terminal of the button cell 1002, and the protrusion plate 420 extending from the main plate 410 is positioned on the rear surface 412 of the main plate 410. The main plate 410 is insulated from and bonded to the cap plate 300 by the bonding layer 500. The outer side edge 413 of the main plate 410 faces the inner side edge 303 of the cap plate 300 forming the penetration hole 310 of the cap plate 300, interposing the bonding layer 500. The outer side edge 413 of the main plate 410 is bonded to the inner side edge 303 of the cap plate 300 by the bonding layer 500.

The front surface 411 of the main plate 410 is positioned at (e.g., in or on) the same plane FP as that of the front surface 301 of the cap plate 300. For example, the front surface of the main plate 410, the front surface 301 of the cap plate 300, and the front surface of the bonding layer 500 may be positioned at (e.g., in or on) the same plane FP as each other. Because the front surface 411 of the main plate 410 and the front surface 301 of the cap plate 300 are positioned at (e.g., in or on) the same plane FP as each other, a thickness of the button cell 1002 may be formed to be relatively thinner.

The main plate 410 includes the same material as that of the protrusion plate 420. For example, the main plate 410 may include the same material as that of the protrusion plate 420, and the main plate 410 may include the same aluminum as that of the protrusion plate 420. The main plate 410 may include a material different from that of cap plate 300. The main plate 410 may include aluminum and the cap plate 300 may include stainless steel, but the present disclosure is not limited thereto, and the main plate 410 and the cap plate 300 may include various suitable metals.

The protrusion plate 420 protrudes on the rear surface 412 of the main plate 410 in the direction from the main plate 410 toward the electrode assembly 100.

The protrusion plate 420 protrudes in the direction from the rear surface 412 of the main plate 410 toward the electrode assembly 100, and may be connected to the second electrode 120. The surface of the protrusion plate 420 is coupled to the second electrode tab 150. The surface of the protrusion plate 420 may be welded to the second electrode tab 150, but the present disclosure is not limited thereto. Because the protrusion plate 420 is coupled to the second electrode tab 150, the terminal plate 400, in which the protrusion plate 420 and the main plate 410 are integrated with each other, may have the same polarity as that of the second electrode 120. The surface of the protrusion plate 420 coupled to the second electrode tab 150 may have a smaller diameter compared to that of the front surface 411 of the main plate 410, which may be an electrode terminal. The protrusion plate 420 and the main plate 410 may be integrally formed with each other by using a forging process or the like.

The protrusion plate 420 includes the same material as that of the second electrode tab 150. For example, the protrusion plate 420 and the second electrode tab 150 may include aluminum. Because the protrusion plate 420 includes the same material as that of the second electrode tab 150, bonding between the electrode assembly 100 and the terminal plate 400 may be relatively easier.

For example, the first thickness T1 of the protrusion plate 420 may be thinner compared to the second thickness T2 of the main plate 410. As another example, the first thickness T1 of the protrusion plate 420 may be thinner compared to the third thickness T3 of the cap plate 300. As another example, the first thickness T1 of the protrusion plate 420 may be thinner compared to the thickness of the bonding layer 500. Because the first thickness T1 of the protrusion plate 420 may be thinner than the second thickness T2 of the main plate 410, the third thickness T3 of the cap plate 300, and the thickness of the bonding layer 500, the distance from the electrode assembly 100 to the terminal plate 400 may be minimized or reduced, and therefore, the thickness of the button cell 1002 may be formed to be relatively thinner.

The main plate 410 and the protrusion plate 420 of the terminal plate 400 may include aluminum, but the present disclosure is not limited thereto, and the main plate 410 and the protrusion plate 420 may each include various suitable metals.

According to an embodiment, the front surface 411 of the main plate 410 of the terminal plate 400 and the front surface 301 of the cap plate 300 may be positioned at (e.g., in or on) the same plane FP as each other, and accordingly, the thickness of the button cell 1002 may be formed to be thinner.

In addition, according to an embodiment, the main plate 410 and the protrusion plate 420 of the terminal plate 400 may include the same material as that of the second electrode tab 150 of the electrode assembly 100, and therefore, bonding between the electrode assembly 100 and the terminal plate 400 may be easier.

In addition, according to an embodiment, because the first thickness T1 of the protrusion plate 420 is thinner than the second thickness T2 of the main plate 410, the third thickness T3 of the cap plate 300, and the thickness of the bonding layer 500, the distance from the electrode assembly 100 to the terminal plate 400 may be minimized or reduced, and therefore, the thickness of the button cell 1002 may be formed to be thinner.

In addition, according to an embodiment, because the bonding layer 500 includes polypropylene resin or the like having elasticity compared to that of ceramic or brittle glass, and bond the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1002 may be improved.

For example, the button cell 1002, having a reduced thickness, facilitating bonding between the electrode assembly 100 and the terminal plate 400, and improving impact resistance may be provided.

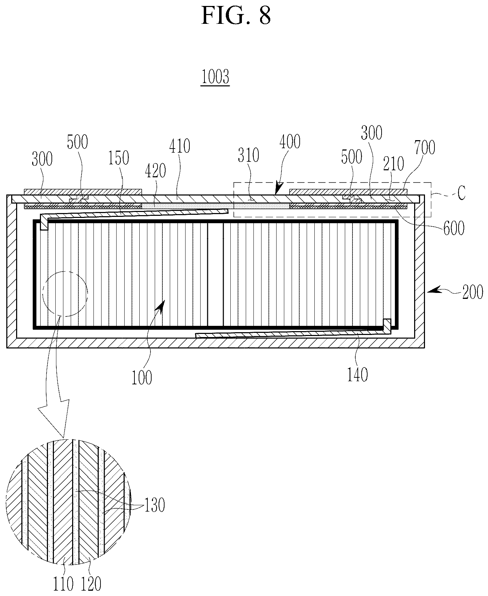

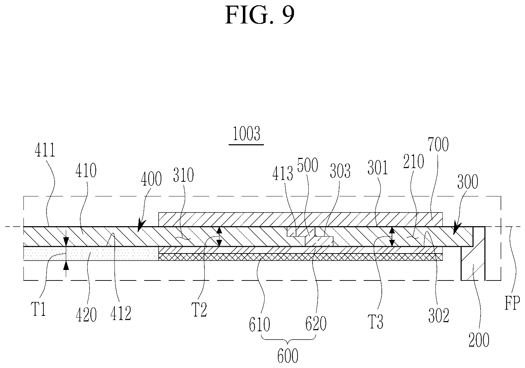

Hereinafter, a button cell according to another embodiment will be described with reference to FIG. 8 and FIG. 9.

Hereinafter, differences between to a button cell according to still another embodiment and a button cell according to the above-described embodiment will be described.

FIG. 8 is a cross-sectional view showing a button cell according to another embodiment. FIG. 9 is an enlarged view of the portion C of FIG. 8.

Referring to FIG. 8 and FIG. 9, a button cell 1003 according to another embodiment may include the electrode assembly 100, the case 200, the cap plate 300, the terminal plate 400, the bonding layer 500, the rear surface insulation layer 600, and a front surface insulation layer 700.

The front surface 411 of the main plate 410 of the terminal plate 400 may be the second electrode terminal of the button cell 1003, and the rear surface 412 of the main plate 410 contacts the protrusion plate 420. The main plate 410 is insulated from and bonded to the cap plate 300 by the bonding layer 500. The outer side edge 413 of the main plate 410 faces the inner side edge 303 of the cap plate 300 forming the penetration hole 310 of the cap plate 300, and thus, interposing the bonding layer 500. The outer side edge 413 of the main plate 410 is bonded to the inner side edge 303 of the cap plate 300 by the bonding layer 500.

The outer side edge 413 of the main plate 410 may have a forward step shape, and the inner side edge 303 of the cap plate 300 may have a reverse step shape. For example, the forward step shape of the outer side edge 413 of the main plate 410 and the reverse step shape of the inner side edge 303 of the cap plate 300 may be longitudinal cross-sectional forms, but the present disclosure is not limited thereto, and may be a transverse cross-sectional form or a cross-sectional form according to an imaginary straight line or an imaginary surface.

Because the outer side edge 413 of the main plate 410 has the forward step shape, the inner side edge 303 of the cap plate 300 has the reverse step shape, and the outer side edge 413 of the main plate 410 and the inner side edge 303 of the cap plate 300 are bonded to each other by the bonding layer 500, a bonding area between the bonding layer 500 and the main plate 410 of the terminal plate 400 may be increased, and a bonding area between the bonding layer 500 and the cap plate 300 may be increased. Therefore, a bonding strength between the main plate 410 and the cap plate 300 may be improved, and an impact resistance of the button cell 1003 may be improved.

The front surface 411 of the main plate 410 is positioned at (e.g., in or on) the same plane FP as that of the front surface 301 of the cap plate 300. For example, the front surface of the main plate 410, the front surface 301 of the cap plate 300, and the front surface of the bonding layer 500 may be positioned at (e.g., in or on) the same plane FP as each other. Because the front surface 411 of the main plate 410 and the front surface 301 of the cap plate 300 are positioned at (e.g., in or on) the same plane FP as each other, a thickness of the button cell 1003 may be formed to be relatively thinner.

The bonding layer 500 may be positioned at the same or substantially the same height as those of the main plate 410 and the cap plate 300 from the electrode assembly 100 between the main plate 410 of the terminal plate 400 and the cap plate 300. The bonding layer 500 may be positioned between the outer side edge 413 of the main plate 410 and the inner side edge 303 of the cap plate 300 forming the penetration hole 310, and the bonding layer 500 bonds between the inner side edge 303 of the cap plate 300 and the outer side edge 413 of the main plate 410. The bonding layer 500 may be positioned inside the penetration hole 310 of the cap plate 300. For example, the bonding layer 500 may be positioned completely inside the penetration hole 310 of the cap plate 300. The bonding layer 500 has a ring shape in a plan view, but the present disclosure is not limited thereto. For example, the bonding layer 500 may have a cross-sectional form corresponding to at least one cross-sectional form from among the inner side edge 303 of the cap plate 300 and/or the outer side edge 413 of the main plate 410. As another example, the bonding layer 500 may have a planar shape corresponding to at least one planar shape from among the inner side edge 303 of the cap plate 300 and/or the outer side edge 413 of the main plate 410.

The front surface insulation layer 700 is positioned on the front surface 411 of the main plate 410, and may correspond to (e.g., overlap with) the rear surface insulation layer 600. The front surface insulation layer 700 extends from the front surface 411 of the main plate 410 to a front surface of the cap plate 300 via the front surface of the bonding layer 500, and may correspond to the rear surface insulation layer 600. The front surface insulation layer 700 may include one layer or a plurality of layers. Because the front surface insulation layer 700 extends from a portion of the front surface 411 of the main plate 410 to the front surface of the cap plate 300, the main plate 410 and the cap plate 300 may be prevented from being short circuited with each other.

According to one or more embodiments, the front surface 411 of the main plate 410 of the terminal plate 400 and the front surface 301 of the cap plate 300 may be positioned at (e.g., in or on) the same plane FP as each other, and accordingly, the thickness of the button cell 1003 may be formed to be thinner.

According to one or more embodiments, because the main plate 410 of the terminal plate 400 may include a different material from that of the protrusion plate 420, the main plate 410 may include a material having a larger strength compared to that of the material of the protrusion plate 420, and the protrusion plate 420 may include the same material as that of the second electrode tab 150 of the electrode assembly 100. Accordingly, bonding between the electrode assembly 100 and the terminal plate 400 may be facilitated, and impact resistance of the button cell 1003 may be improved.

According to one or more embodiments, because the first thickness T1 of the protrusion plate 420 may be thinner than the second thickness T2 of the main plate 410, the third thickness T3 of the cap plate 300, and the thickness of the bonding layer 500, the distance from the electrode assembly 100 to the terminal plate 400 may be minimized or reduced, and therefore, the thickness of the button cell 1003 may be formed to be thinner.

According to one or more embodiments, because the bonding layer 500 includes polypropylene resin or the like having an elasticity compared to that of ceramic or brittle glass, and bond the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1003 may be improved.

According to one or more embodiments, because a bonding area between the cap plate 300 and the main plate 410 of the terminal plate 400 may be increased, the bonding strength between the main plate 410 and the cap plate 300 may be improved, and impact resistance of the button cell 1003 may be improved.

For example, the button cell 1003 having a reduced thickness, facilitating bonding between the electrode assembly 100 and the terminal plate 400, and improving impact resistance may be provided.

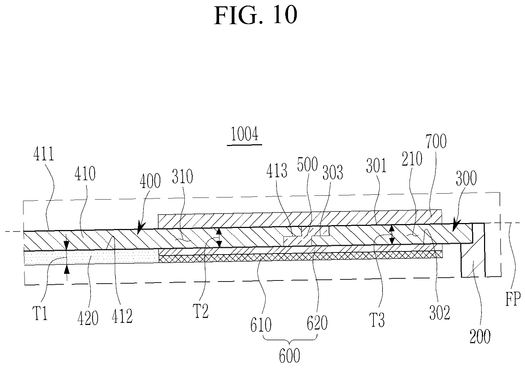

Hereinafter, a button cell according to another embodiment will be described with reference to FIG. 10.

Hereinafter, the differences between to the button cell described in more detail hereinafter with reference to FIG. 10 and a button cell according to one or more embodiments described above may be described in more detail, and redundant description may not be repeated.

FIG. 10 is a cross-sectional view illustrating a portion of a button cell according to another embodiment.

Referring to FIG. 10, a button cell 1004 according to another embodiment may include an electrode assembly, the case 200, the cap plate 300, the terminal plate 400, the bonding layer 500, the rear surface insulation layer 600, and the front surface insulation layer 700.

The front surface 411 of the main plate 410 of the terminal plate 400 may be the second electrode terminal of the button cell 1004, and the rear surface 412 of the main plate 410 contacts the protrusion plate 420. The main plate 410 is insulated from and bonded to the cap plate 300 by the bonding layer 500. The outer side edge 413 of the main plate 410 faces the inner side edge 303 of the cap plate 300 forming the penetration hole 310 of the cap plate 300, and thus, interposing the bonding layer 500 therebetween. The outer side edge 413 of the main plate 410 is bonded to the inner side edge 303 of the cap plate 300 by the bonding layer 500.

The outer side edge 413 of the main plate 410 may have a reverse step shape, and the inner side edge 303 of the cap plate 300 may have a forward step shape. For example, the reverse step shape of the outer side edge 413 of the main plate 410 and the forward step shape of the inner side edge 303 of the cap plate 300 may be longitudinal cross-sectional forms, but the present disclosure is not limited thereto, and may be a transverse cross-sectional form or a cross-sectional form according to an imaginary straight line or an imaginary surface.

Because the outer side edge 413 of the main plate 410 has the reverse step shape, the inner side edge 303 of the cap plate 300 has the forward step shape, and the outer side edge 413 of the main plate 410 and the inner side edge 303 of the cap plate 300 are bonded to each other by the bonding layer 500, the bonding area between the bonding layer 500 and the main plate 410 of the terminal plate 400 as well as the bonding area between the bonding layer 500 and the cap plate 300 may be increased. Therefore, the bonding strength between the main plate 410 and the cap plate 300 may be improved, and impact resistance of the button cell 1004 may be improved.

The front surface 411 of the main plate 410 may be positioned at (e.g., in or on) the same plane FP as that of the front surface 301 of the cap plate 300. For example, the front surface of the main plate 410, the front surface 301 of the cap plate 300, and the front surface of the bonding layer 500 may be positioned at (e.g., in or on) the same plane FP as each other. Because the front surface 411 of the main plate 410 and the front surface 301 of the cap plate 300 may be positioned at (e.g., in or on) the same plane FP as each other, a thickness of the button cell 1004 may be formed to be thinner.

The bonding layer 500 may be positioned at the same or substantially the same height as those of the main plate 410 and the cap plate 300 from the electrode assembly between the main plate 410 of the terminal plate 400 and the cap plate 300. The bonding layer 500 is positioned between the outer side edge 413 of the main plate 410 and the inner side edge 303 of the cap plate 300 forming the penetration hole 310, and the bonding layer 500 bonds between the inner side edge 303 of the cap plate 300 and the outer side edge 413 of the main plate 410. The bonding layer 500 may be positioned inside the penetration hole 310 of the cap plate 300. For example, the bonding layer 500 may be positioned completely inside the penetration hole 310 of the cap plate 300. The bonding layer 500 has a ring shape in a plan view, but the present disclosure is not limited thereto. For example, the bonding layer 500 may have a cross-sectional form corresponding to at least one cross-sectional form from among the inner side edge 303 of the cap plate 300 and/or the outer side edge 413 of the main plate 410. As another example, the bonding layer 500 may have a planar shape corresponding to at least one planar shape from among the inner side edge 303 of the cap plate 300 and/or the outer side edge 413 of the main plate 410.

The front surface insulation layer 700 is positioned on the front surface 411 of the main plate 410, and may correspond to (e.g., may overlap with) the rear surface insulation layer 600. The front surface insulation layer 700 extends from the front surface 411 of the main plate 410 to the front surface of the cap plate 300 via the front surface of the bonding layer 500, and may correspond to the rear surface insulation layer 600. The front surface insulation layer 700 may include one layer or a plurality of layers. Because the front surface insulation layer 700 extends from the portion of the front surface 411 of the main plate 410 to the front surface of the cap plate 300, the main plate 410 and the cap plate 300 may be prevented from being short circuited with each other.

According to one or more embodiments, the front surface 411 of the main plate 410 of the terminal plate 400 and the front surface 301 of the cap plate 300 may be positioned at (e.g., in or on) the same plane FP as each other, and accordingly, the thickness of the button cell 1004 may be formed to be thinner.

According to one or more embodiments, because the main plate 410 of the terminal plate 400 includes a different material from that of the protrusion plate 420, the main plate 410 may include a material having a larger strength compared to that of the material of the protrusion plate 420, and the protrusion plate 420 may include the same material as that of the second electrode tab 150 of the electrode assembly, by which bonding between the electrode assembly and the terminal plate 400 may be facilitated, and impact resistance of the button cell 1004 may be improved.

According to one or more embodiments, because the first thickness T1 of the protrusion plate 420 is thinner than the second thickness T2 of the main plate 410, the third thickness T3 of the cap plate 300, and the thickness of the bonding layer 500, the distance from the electrode assembly to the terminal plate 400 may be minimized or reduced, and therefore, the thickness of the button cell 1004 may be formed to be thinner.

According to one or more embodiments, because the bonding layer 500 includes polypropylene resin or the like having an elasticity compared to that of ceramic or brittle glass, and bond the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1004 may be improved.

According to one or more embodiments, because the bonding area between the cap plate 300 and the main plate 410 of the terminal plate 400 may be increased, the bonding strength between the main plate 410 and the cap plate 300 may be improved, and impact resistance of the button cell 1004 may be improved.

For example, the button cell 1004 having a reduced thickness, facilitating bonding between the electrode assembly and the terminal plate 400, and improving impact resistance may be provided.

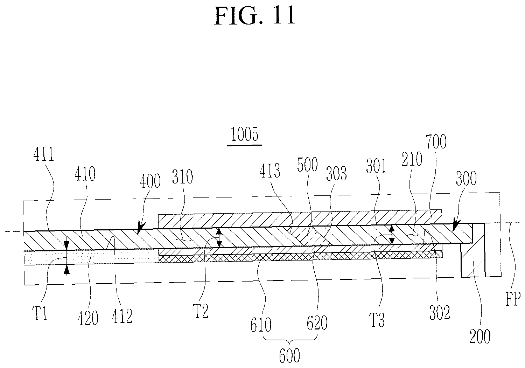

Hereinafter, a button cell according to another embodiment will be described with reference to FIG. 11.

Hereinafter, the differences between to the button cell described in more detail with reference to FIG. 11 and the button cell according to one or more embodiments described above will be described in more detail, and redundant description may not be repeated.

FIG. 11 is a cross-sectional view illustrating a portion of a button cell according to another embodiment.

Referring to FIG. 11, a button cell 1005 according to another embodiment may include an electrode assembly, the case 200, the cap plate 300, the terminal plate 400, the bonding layer 500, the rear surface insulation layer 600, and the front surface insulation layer 700.

The front surface 411 of the main plate 410 of the terminal plate 400 may be the second electrode terminal of the button cell 1005, and the rear surface 412 of the main plate 410 contacts the protrusion plate 420. The main plate 410 is insulated from and bonded to the cap plate 300 by the bonding layer 500. The outer side edge 413 of the main plate 410 faces the inner side edge 303 of the cap plate 300 forming the penetration hole 310 of the cap plate 300, thereby interposing the bonding layer 500 therebetween. The outer side edge 413 of the main plate 410 is bonded to the inner side edge 303 of the cap plate 300 by the bonding layer 500.

The outer side edge 413 of the main plate 410 may have a forward inclined shape, and the inner side edge 303 of the cap plate 300 may have a reverse inclined shape. For example, the forward inclined shape of the outer side edge 413 of the main plate 410 and the reverse inclined shape of the inner side edge 303 of the cap plate 300 may be longitudinal cross-sectional forms, but the present disclosure is not limited thereto, and may be a transverse cross-sectional form or a cross-sectional form according to an imaginary straight line or an imaginary surface.

Because the outer side edge 413 of the main plate 410 has the forward inclined shape, the inner side edge 303 of the cap plate 300 has the reverse inclined shape, and the outer side edge 413 of the main plate 410 and the inner side edge 303 of the cap plate 300 are bonded to each other by the bonding layer 500, the bonding area between the bonding layer 500 and the main plate 410 of the terminal plate 400 as well as the bonding area between the bonding layer 500 and the cap plate 300 may be increased. Therefore, the bonding strength between the main plate 410 and the cap plate 300 may be improved, and impact resistance of the button cell 1005 may be improved.

The front surface 411 of the main plate 410 is positioned at (e.g., in or on) the same plane FP as that of the front surface 301 of the cap plate 300. For example, the front surface of the main plate 410, the front surface 301 of the cap plate 300, and the front surface of the bonding layer 500 may be positioned at (e.g., in or on) the same plane FP as each other. Because the front surface 411 of the main plate 410 and the front surface 301 of the cap plate 300 are positioned at (e.g., in or on) the same plane FP as each other, a thickness of the button cell 1005 may be formed to be thinner.

The bonding layer 500 may be positioned at the same or substantially the same height as those of the main plate 410 and the cap plate 300 from the electrode assembly between the main plate 410 of the terminal plate 400 and the cap plate 300. The bonding layer 500 is positioned between the outer side edge 413 of the main plate 410 and the inner side edge 303 of the cap plate 300 forming the penetration hole 310, and the bonding layer 500 bonds between the inner side edge 303 of the cap plate 300 and the outer side edge 413 of the main plate 410. The bonding layer 500 may be positioned inside the penetration hole 310 of the cap plate 300. For example, the bonding layer 500 may be positioned completely inside the penetration hole 310 of the cap plate 300. The bonding layer 500 has a ring shape in a plan view, but the present disclosure is not limited thereto. For example, the bonding layer 500 may have a cross-sectional form corresponding to at least one cross-sectional form from among the inner side edge 303 of the cap plate 300 and/or the outer side edge 413 of the main plate 410. As another example, the bonding layer 500 may have a planar shape corresponding to at least one planar shape from among the inner side edge 303 of the cap plate 300 and/or the outer side edge 413 of the main plate 410.

The front surface insulation layer 700 is positioned on the front surface 411 of the main plate 410, and may correspond to (e.g., may overlap with) the rear surface insulation layer 600. The front surface insulation layer 700 extends from the front surface 411 of the main plate 410 to the front surface of the cap plate 300 via the front surface of the bonding layer 500, and may correspond to the rear surface insulation layer 600. The front surface insulation layer 700 may include one layer or a plurality of layers. Because the front surface insulation layer 700 extends from the portion of the front surface 411 of the main plate 410 to the front surface of the cap plate 300, the main plate 410 and the cap plate 300 may be prevented from being short circuited with each other.

According to one or more embodiments, the front surface 411 of the main plate 410 of the terminal plate 400 and the front surface 301 of the cap plate 300 may be positioned at (e.g., in or on) the same plane FP as each other, and accordingly, the thickness of the button cell 1005 may be formed to be thinner.

According to one or more embodiments, because the main plate 410 of the terminal plate 400 includes a different material from that of the protrusion plate 420, the main plate 410 may include a material having a larger strength compared to that of the material of the protrusion plate 420, and the protrusion plate 420 may include the same material as that of the second electrode tab 150 of the electrode assembly, by which bonding between the electrode assembly and the terminal plate 400 may be facilitated, and impact resistance of the button cell 1005 may be improved.

According to one or more embodiments, because the first thickness T1 of the protrusion plate 420 is thinner than the second thickness T2 of the main plate 410, the third thickness T3 of the cap plate 300, and the thickness of the bonding layer 500, the distance from the electrode assembly to the terminal plate 400 may be minimized or reduced, and therefore, the thickness of the button cell 1005 may be formed to be thinner.

According to one or more embodiments, because the bonding layer 500 includes polypropylene resin or the like having an elasticity compared to that of ceramic or brittle glass, and bond the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1005 may be improved.

According to one or more embodiments, because the bonding area between the cap plate 300 and the main plate 410 of the terminal plate 400 may be increased, the bonding strength between the main plate 410 and the cap plate 300 may be improved, and impact resistance of the button cell 1005 may be improved.

For example, the button cell 1005 having a reduced thickness, facilitating bonding between the electrode assembly and the terminal plate 400, and improving impact resistance may be provided.

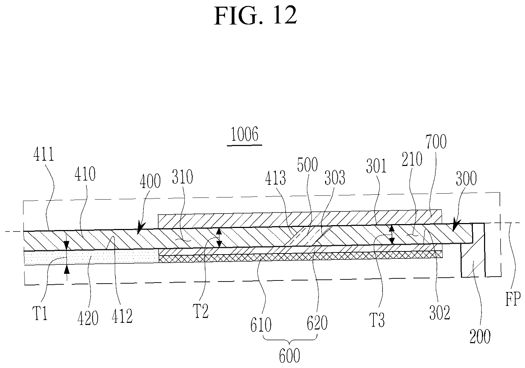

Hereinafter, a button cell according to another embodiment will be described with reference to FIG. 12.

Hereinafter, the differences between to the button cell described in more detail with reference to FIG. 12 and the button cell according to one or more embodiments described above may be described in more detail, and redundant description may not be repeated.

FIG. 12 is a cross-sectional view illustrating a portion of a button cell according to another embodiment.

Referring to FIG. 12, a button cell 1006 according to another embodiment may include an electrode assembly, the case 200, the cap plate 300, the terminal plate 400, the bonding layer 500, the rear surface insulation layer 600, and the front surface insulation layer 700.

The front surface 411 of the main plate 410 of the terminal plate 400 may be the second electrode terminal of the button cell 1006, and the rear surface 412 of the main plate 410 contacts the protrusion plate 420. The main plate 410 is insulated from and bonded to the cap plate 300 by the bonding layer 500. The outer side edge 413 of the main plate 410 faces the inner side edge 303 of the cap plate 300 forming the penetration hole 310 of the cap plate 300, thereby interposing the bonding layer 500 therebetween. The outer side edge 413 of the main plate 410 is bonded to the inner side edge 303 of the cap plate 300 by the bonding layer 500.

The outer side edge 413 of the main plate 410 may have a reverse inclined shape, and the inner side edge 303 of the cap plate 300 may have a forward inclined shape. For example, the reverse inclined shape of the outer side edge 413 of the main plate 410 and the forward inclined shape of the inner side edge 303 of the cap plate 300 may be longitudinal cross-sectional forms, but the present disclosure is not limited thereto, and may be a transverse cross-sectional form or a cross-sectional form according to an imaginary straight line or an imaginary surface.

Because the outer side edge 413 of the main plate 410 has the reverse inclined shape, the inner side edge 303 of the cap plate 300 has the forward inclined shape, and the outer side edge 413 of the main plate 410 and the inner side edge 303 of the cap plate 300 are bonded to each other by the bonding layer 500, the bonding area between the bonding layer 500 and the main plate 410 of the terminal plate 400 as well as the bonding area between the bonding layer 500 and the cap plate 300 may be increased. Therefore, the bonding strength between the main plate 410 and the cap plate 300 may be improved, and impact resistance of the button cell 1006 may be improved.

The front surface 411 of the main plate 410 is positioned at (e.g., in or on) the same plane FP as that of the front surface 301 of the cap plate 300. For example, the front surface of the main plate 410, the front surface 301 of the cap plate 300, and the front surface of the bonding layer 500 may be positioned at (e.g., in or on) the same plane FP as each other. Because the front surface 411 of the main plate 410 and the front surface 301 of the cap plate 300 are positioned at (e.g., in or on) the same plane FP as each other, a thickness of the button cell 1006 may be formed to be thinner.

The bonding layer 500 may be positioned at the same or substantially the same height as those of the main plate 410 and the cap plate 300 from the electrode assembly between the main plate 410 of the terminal plate 400 and the cap plate 300. The bonding layer 500 is positioned between the outer side edge 413 of the main plate 410 and the inner side edge 303 of the cap plate 300 forming the penetration hole 310, and the bonding layer 500 bonds between the inner side edge 303 of the cap plate 300 and the outer side edge 413 of the main plate 410. The bonding layer 500 may be positioned inside the penetration hole 310 of the cap plate 300. For example, the bonding layer 500 may be positioned completely inside the penetration hole 310 of the cap plate 300. The bonding layer 500 has a ring shape in a plan view, but the present disclosure is not limited thereto. For example, the bonding layer 500 may have a cross-sectional form corresponding to at least one cross-sectional form from among the inner side edge 303 of the cap plate 300 and/or the outer side edge 413 of the main plate 410. As another example, the bonding layer 500 may have a planar shape corresponding to at least one planar shape from among the inner side edge 303 of the cap plate 300 and/or the outer side edge 413 of the main plate 410.

The front surface insulation layer 700 is positioned on the front surface 411 of the main plate 410, and may correspond to (e.g., overlap with) the rear surface insulation layer 600. The front surface insulation layer 700 extends from the front surface 411 of the main plate 410 to the front surface 301 of the cap plate 300 via the front surface of the bonding layer 500, and may correspond to the rear surface insulation layer 600. The front surface insulation layer 700 may include one layer or a plurality of layers. Because the front surface insulation layer 700 extends from the portion of the front surface 411 of the main plate 410 to the front surface of the cap plate 300, the main plate 410 and the cap plate 300 may be prevented from being short circuited with each other.

According to one or more embodiments, the front surface 411 of the main plate 410 of the terminal plate 400 and the front surface 301 of the cap plate 300 may be positioned at (e.g., in or on) the same plane FP as each other, and accordingly, the thickness of the button cell 1006 may be formed to be thinner.

According to one or more embodiments, because the main plate 410 of the terminal plate 400 includes a different material from that of the protrusion plate 420, the main plate 410 may include a material having a larger strength compared to that of the material of the protrusion plate 420, and the protrusion plate 420 may include the same material as that of the second electrode tab 150 of the electrode assembly, by which bonding between the electrode assembly and the terminal plate 400 may be facilitated, and impact resistance of the button cell 1006 may be improved.

According to one or more embodiments, because the first thickness T1 of the protrusion plate 420 may be thinner than the second thickness T2 of the main plate 410, the third thickness T3 of the cap plate 300, and the thickness of the bonding layer 500, the distance from the electrode assembly to the terminal plate 400 may be minimized or reduced, and therefore, the thickness of the button cell 1006 may be formed to be thinner.

According to one or more embodiments, because the bonding layer 500 includes polypropylene resin or the like having an elasticity compared to that of ceramic or brittle glass, and bond the cap plate 300 and the main plate 410 to each other at the same height as those of the main plate 410 and the cap plate 300, separating the bonding layer 500 from between the main plate 410 and the cap plate 300 by external impacts may be suppressed, and accordingly, impact resistance of the button cell 1006 may be improved.

According to one or more embodiments, because the bonding area between the cap plate 300 and the main plate 410 of the terminal plate 400 may be increased, the bonding strength between the main plate 410 and the cap plate 300 may be improved, and impact resistance of the button cell 1006 may be improved.

For example, the button cell 1006 having a reduced thickness, facilitating bonding between the electrode assembly and the terminal plate 400, and improving impact resistance may be provided.

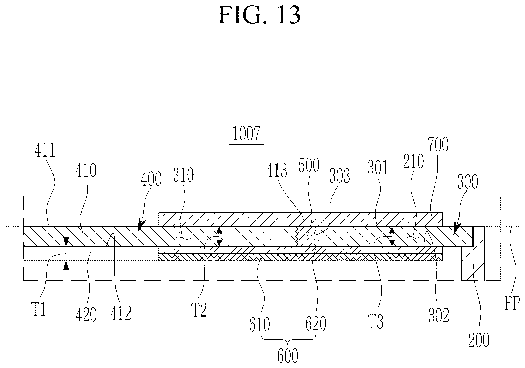

Hereinafter, a button cell according to another embodiment will be described with reference to FIG. 13.

Hereinafter, the differences between to the button cell described in more detail with reference to FIG. 13 and the button cell according to one or more embodiments described above may be described in more detail, and redundant description may not be repeated.

FIG. 13 is a cross-sectional view illustrating a portion of a button cell according to another embodiment.

Referring to FIG. 13, a button cell 1007 according to another embodiment may include an electrode assembly, the case 200, the cap plate 300, the terminal plate 400, the bonding layer 500, the rear surface insulation layer 600, and the front surface insulation layer 700.

The front surface 411 of the main plate 410 of the terminal plate 400 may be the second electrode terminal of the button cell 1007, and the rear surface 412 of the main plate 410 contacts the protrusion plate 420. The main plate 410 is insulated from and bonded to the cap plate 300 by the bonding layer 500. The outer side edge 413 of the main plate 410 faces the inner side edge 303 of the cap plate 300 forming the penetration hole 310 of the cap plate 300, thereby interposing the bonding layer 500 therebetween. The outer side edge 413 of the main plate 410 is bonded to the inner side edge 303 of the cap plate 300 by the bonding layer 500.

The outer side edge 413 of the main plate 410 may have protrusions and depressions, and the inner side edge 303 of the cap plate 300 may have protrusions and depressions. For example, the protrusions and depressions of the outer side edge 413 of the main plate 410 and the protrusions and depressions of the inner side edge 303 of the cap plate 300 may be longitudinal cross-sectional forms, but the present disclosure is not limited thereto, and may be a transverse cross-sectional form or a cross-sectional form according to an imaginary straight line or an imaginary surface.

Because the outer side edge 413 of the main plate 410 has the protrusions and depressions, the inner side edge 303 of the cap plate 300 has the protrusions and depressions, and the outer side edge 413 of the main plate 410 and the inner side edge 303 of the cap plate 300 are bonded to each other by the bonding layer 500, the bonding area between the bonding layer 500 and the main plate 410 of the terminal plate 400 as well as the bonding area between the bonding layer 500 and the cap plate 300 may be increased. Therefore, the bonding strength between the main plate 410 and the cap plate 300 may be improved, and impact resistance of the button cell 1007 may be improved.

The front surface 411 of the main plate 410 is positioned at (e.g., in or on) the same plane FP as that of the front surface 301 of the cap plate 300. For example, the front surface of the main plate 410, the front surface 301 of the cap plate 300, and the front surface of the bonding layer 500 may be positioned at (e.g., in or on) the same plane FP as each other. Because the front surface 411 of the main plate 410 and the front surface 301 of the cap plate 300 may be positioned at (e.g., in or on) the same plane FP as each other, a thickness of the button cell 1007 may be formed to be thinner.

The bonding layer 500 may be positioned at the same or substantially the same height as those of the main plate 410 and the cap plate 300 from the electrode assembly between the main plate 410 of the terminal plate 400 and the cap plate 300. The bonding layer 500 is positioned between the outer side edge 413 of the main plate 410 and the inner side edge 303 of the cap plate 300 forming the penetration hole 310, and the bonding layer 500 bonds between the inner side edge 303 of the cap plate 300 and the outer side edge 413 of the main plate 410. The bonding layer 500 may be positioned inside the penetration hole 310 of the cap plate 300. For example, the bonding layer 500 may be positioned completely inside the penetration hole 310 of the cap plate 300. The bonding layer 500 has a ring shape in a plan view, but the present disclosure is not limited thereto. For example, the bonding layer 500 may have a cross-sectional form corresponding to at least one cross-sectional form from among the inner side edge 303 of the cap plate 300 and/or the outer side edge 413 of the main plate 410. As another example, the bonding layer 500 may have a planar shape corresponding to at least one planar shape from among the inner side edge 303 of the cap plate 300 and/or the outer side edge 413 of the main plate 410.

The front surface insulation layer 700 is positioned on the front surface 411 of the main plate 410, and may correspond to (e.g., overlap with) the rear surface insulation layer 600. The front surface insulation layer 700 extends from the front surface 411 of the main plate 410 to the front surface of the cap plate 300 via the front surface of the bonding layer 500, and may correspond to the rear surface insulation layer 600. The front surface insulation layer 700 may include one layer or a plurality of layers. Because the front surface insulation layer 700 extends from the portion of the front surface 411 of the main plate 410 to the front surface of the cap plate 300, the main plate 410 and the cap plate 300 may be prevented from being short circuited with each other.

According to one or more embodiments, the front surface 411 of the main plate 410 of the terminal plate 400 and the front surface 301 of the cap plate 300 may be positioned at (e.g., in or on) the same plane FP as each other, and accordingly, the thickness of the button cell 1007 may be formed to be thinner.

According to one or more embodiments, because the main plate 410 of the terminal plate 400 includes a different material from that of the protrusion plate 420, the main plate 410 may include a material having a larger strength compared to that of the material of the protrusion plate 420, and the protrusion plate 420 may include the same material as that of the second electrode tab 150 of the electrode assembly, by which bonding between the electrode assembly and the terminal plate 400 may be facilitated, and impact resistance of the button cell 1007 may be improved.

According to one or more embodiments, because the first thickness T1 of the protrusion plate 420 may be thinner than the second thickness T2 of the main plate 410, the third thickness T3 of the cap plate 300, and the thickness of the bonding layer 500, the distance from the electrode assembly to the terminal plate 400 may be minimized or reduced, and therefore, the thickness of the button cell 1007 may be formed to be thinner.

According to one or more embodiments, because the bonding layer 500 includes polypropylene resin or the like having an elasticity compared to that of ceramic or brittle glass, and bond the cap plate 300 and the main plate 410 to each other at the same or substantially the same height as those of the main plate 410 and the cap plate 300, separating the bonding layer 500 from between the main plate 410 and the cap plate 300 by external impacts may be suppressed, and accordingly, impact resistance of the button cell 1007 may be improved.

According to one or more embodiments, because the bonding area between the cap plate 300 and the main plate 410 of the terminal plate 400 may be increased, the bonding strength between the main plate 410 and the cap plate 300 may be improved, and impact resistance of the button cell 1007 may be improved.

For example, the button cell 1007 having a reduced thickness, facilitating bonding between the electrode assembly and the terminal plate 400, and improving impact resistance may be provided.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### Description of symbols

100: electrode assembly
200: case
300: cap plate
400: terminal plate
410: main plate
420: protrusion plate
500: bonding layer
600: rear surface insulation layer

## Claims

1. A button cell (1000, 1002, 1003, 1004, 1005, 1006, 1007), comprising:
an electrode assembly (100) comprising a first electrode (110), a second electrode (120), and a separator (130) between the first electrode (110) and the second electrode (120);
a case (200) connected to the first electrode (110), accommodating the electrode assembly (100), and having an opening (210) exposing the electrode assembly (100);
a cap plate (300) coupled to the case (200) to cover an outer boundary region of the opening (210), and having a penetration hole (310) exposing a central region of the opening (210);
a terminal plate (400) connected to the second electrode (120), electrically insulated from and bonded to the cap plate (300), and comprising a protrusion plate (420) protruding from a rear surface ( 412) of a main plate (410) in a direction toward the electrode assembly (100), the main plate (410) covering the penetration hole (310); and
a bonding layer (500) between the cap plate (300) and the main plate (410), and electrically insulating and bonding between the cap plate (300) and the main plate (410),
wherein a front surface (411) of the main plate (410) and a front surface (301) of the cap plate (300) lie in the same plane.

2. The button cell (1000, 1002, 1003, 1004, 1005, 1006, 1007) as claimed in claim 1, wherein the electrode assembly (100) further comprises:
a first electrode tab (140) extending from the first electrode (110), and welded to the case (200); and
a second electrode tab (150) extending from the second electrode (120), and welded to the protrusion plate (420) of the terminal plate (400).

3. The button cell (1000, 1002, 1003, 1004, 1005, 1006, 1007) as claimed in claims 1 or 2, wherein the protrusion plate (420) comprises the same material as that of the second electrode tab (150).

4. The button cell (1000, 1002, 1003, 1004, 1005, 1006, 1007) as claimed in claim 3, wherein the protrusion plate (420) comprises aluminum.

5. The button cell (1000, 1002, 1003, 1004, 1005, 1006, 1007) as claimed in claim 3, wherein the main plate (410) comprises a material different from that of the protrusion plate (420).

6. The button cell (1000, 1002, 1003, 1004, 1005, 1006, 1007) as claimed in claim 5, wherein the main plate (410) comprises the same material as that of the cap plate (300).

7. The button cell (1000, 1002, 1003, 1004, 1005, 1006, 1007) as claimed in one of claims 5 and 6, wherein the main plate (410) comprises stainless steel.

8. The button cell (1000, 1002, 1003, 1004, 1005, 1006, 1007) as claimed in claim 3, wherein the main plate (410) comprises the same material as that of the protrusion plate (420).

9. The button cell (1000, 1002, 1003, 1004, 1005, 1006, 1007) as claimed in claim 8, wherein the main plate (410) is integral with the protrusion plate (420).

10. The button cell (1000, 1002, 1003, 1004, 1005, 1006, 1007) as claimed in one of claims 8 and 9, wherein the main plate (410) comprises a material different from that of the cap plate (300).

11. The button cell (1000, 1002, 1003, 1004, 1005, 1006, 1007) as claimed in one of claims 8 to 10, wherein the main plate (410) comprises aluminum (Al).

12. The button cell (1000, 1002, 1003, 1004, 1005, 1006, 1007) as claimed in one of the preceding claims, wherein the bonding layer (500) is located at the same height as those of the main plate (410) and the cap plate (300) from the electrode assembly (100).

13. The button cell (1000, 1002, 1003, 1004, 1005, 1006, 1007) as claimed in one of the preceding claims, wherein the bonding layer (500) is located between an outer side edge (413) of the main plate (410) and an inner side edge (303) of the cap plate (300) defining the penetration hole (310); and
the outer side edge (413) of the main plate (410) has a forward step shape and the inner side edge (303) of the cap plate (300) has a reverse step shape;
or
the outer side edge (413) of the main plate (410) has a reverse step shape and
the inner side edge (303) of the cap plate (300) has a forward step shape;
or
the outer side edge (413) of the main plate (410) has a forward inclined shape and the inner side edge (303) of the cap plate (300) has a reverse inclined shape;
or
the outer side edge (413) of the main plate (410) has a reverse inclined shape and the inner side edge (303) of the cap plate (300) has a forward inclined shape.

14. The button cell (1000, 1002, 1003, 1004, 1005, 1006, 1007) as claimed in one of the preceding claims, wherein the bonding layer (500) is located between an outer side edge (413) of the main plate (410) and an inner side edge (303) of the cap plate (300) defining the penetration hole (310);
the outer side edge (413) of the main plate (410) has protrusions and depressions; and
the inner side edge (303) of the cap plate (300) has protrusions and depressions.

15. The button cell (1000, 1002, 1003, 1004, 1005, 1006, 1007) as claimed in one of the preceding claims, wherein the bonding layer (500) has a planar ring shape.
